# EUROPEAN PATENT APPLICATION

(11) **EP 2 792 233 A1**
(43) Date of publication of application: **22.10.2014**
(21) Application number: 11877595.6
(22) Date of filing: 13.12.2011
(51) Int. Cl.: A01G 23/04, A01G 9/10

(54) **TRANSPLANTATION CONE FOR NURSERIES**

(71) Applicant: Arnanz Rivas, Angel, 45600 Talavera de la Reina (Toledo) (ES)
(72) Inventor: Arnanz Rivas, Angel, 45600 Talavera de la Reina (Toledo) (ES)
(74) Representative: Gil-Vega, Victor
(86) International application number: PCT/ES2011/070860
(87) International publication number: WO 2013/087950

(57) **Abstract**

Transplant container for nurseries comprising two basic pieces made of plastic material, preferably through injection moulding, a basic piece whit a conical shape, with the narrow end pointing upwards, hollow and open to minimize the amount of material required to obtain it, and with a reduced angle of inclination of the generatrix, comprising, in the upper face, a plurality of radial ribs, preferably three, arranged at equal angles, with a gradually larger profile towards the periphery of such base, which incorporate, in their free end, corresponding to the perimeter of such piece, an upper projection which acts as the stop block of the second piece, which has a bell configuration, also of a truncated cone shape, with a sharper angle of inclination of the generatrix and including an opening at the point, to allow the passage of the seedling.

## Description

### OBJECT OF THE INVENTION

The present invention relates to a seedbed or container which has been especially devised to be used in nurseries, and which is very suitable for the cultivation of trees, from their initial stage as a seedling until they are pricked out to the soil where the tree will be finally located.

One of the objects of the invention is to cooperate with the strengthening of the plant, both inside the container and during its subsequent planting at the final land, also substantially improving the conditions of transportation, as far as the stability of the root-ball is concerned.

Another object of the invention is to obtain a better steering of the plant roots, that allows their subsequent transplantation at shallow depths.

### BACKGROUND OF THE INVENTION

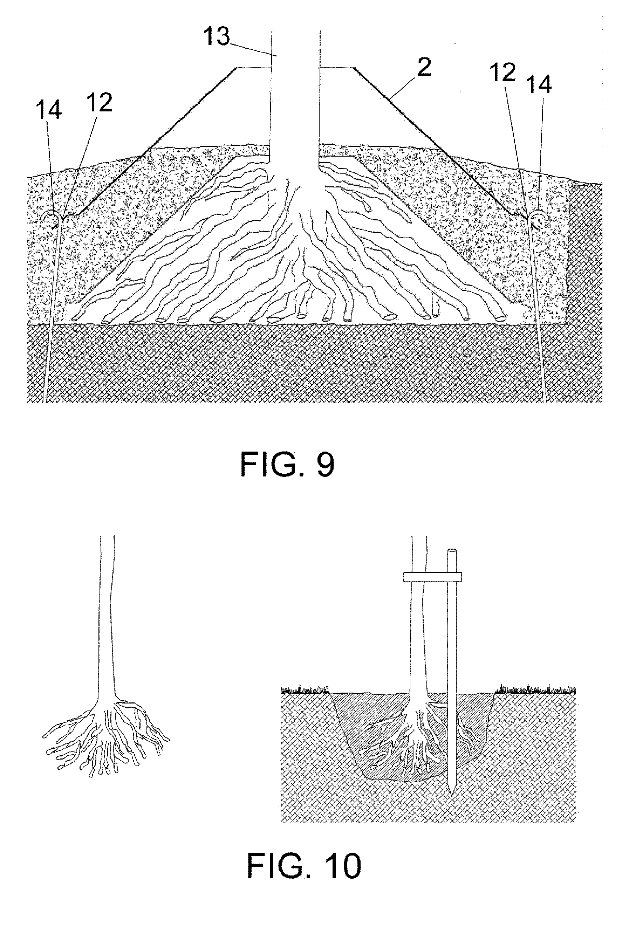

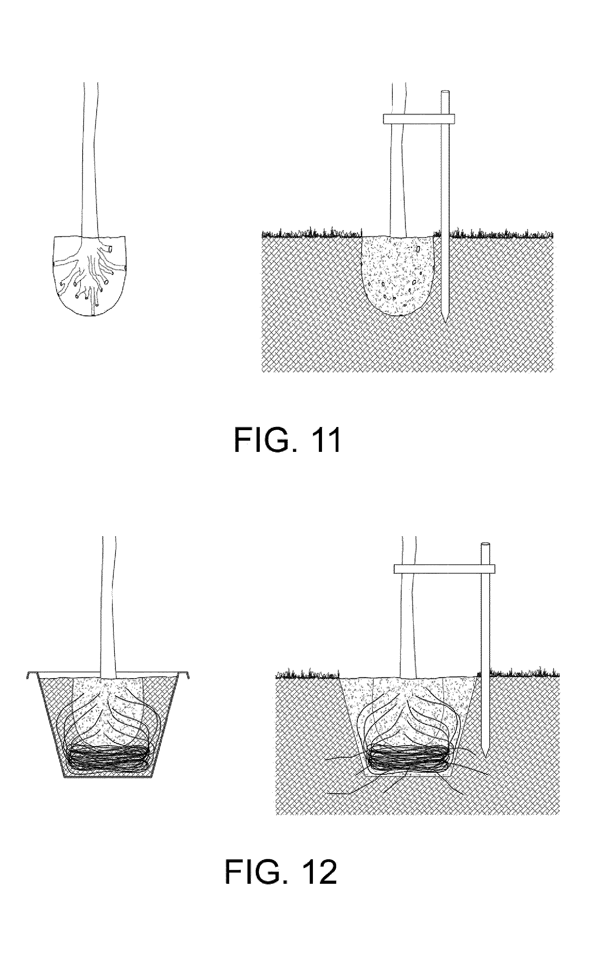

The typical methods used to sell a tree which has been raised at a nursery are:
- Bare root seedlings: this system entails the lost of a large part of the root system (fine roots), while the remaining roots suffer damages when they are pulled up, as well as during their transportation (breaking off, impacts, tearing, etc...), which makes it necessary to cut them when it comes time to transplant, which limits the size of the tree and is not appropriate for delicate trees or perennial trees, as it can be observed in figure 10.
- With root-ball: this calls for the packaging with wire mesh, sack, plaster, etc. so that the root-ball is not broken up. The tiny size of the roots and the excessive weight of the ball-tree limits to a large extent the size of the tree to be transplanted; furthermore, the cuttings of the roots are not precise and have a large size, as they are very near to the trunk, as it can be observed in figure 11.

Both systems call for the use of stakes and a radical pruning to achieve a balance between the root and the tree top, which represents a significant constraint for the growth of the tree.
- In pots: the production of trees inside pots begins with any of the previous methods: bare root seedlings (in case of deciduous trees) or root-ball (in case of perennial trees).
   The seedling is inserted in a larger pot filled with substrate. The plant stays at the nursery for one or several years (depending on the size of the pot) until the root system of the tree occupies the whole pot, so that the new root-ball does not break up during the transplantation, as it can be observed in figure 12.
   These pots present a truncated cone shape divergent towards their mouth, to facilitate the subsequent extraction of the tree with its relevant root-ball. This arrangement implies that the roots grow downwards until this is prevented by the body of the pot, coiling themselves and adopting the shape of the pot.
   When it is time to transplant the tree at the garden, a quite deep hole must be done to house the new root-ball.
   The result, after the transplant, is a root system coiled around the base of the root-ball and buried very deep in the ground. This entails the atrophy of the roots as a result of the lack of oxygen or, if this is not the case, as they grow bigger, the roots would ultimately strangle the root-ball which, in many occasions, may even fall the tree with the help of wind. This system also calls for the use of stakes.

### DESCRIPTION OF THE INVENTION

The device proposed by the invention solves, in a fully satisfactory manner, all the aforementioned problems, as far as their different aspects are concerned, and simultaneously represents a series of advantages that will become clearer throughout this description.

More specifically, the pot comprises two basic pieces made of plastic material, preferably through injection moulding, a basic piece with a conical shape, with the narrow end pointing upwards, hollow and open to minimize the amount of material required to obtain it, and with a reduced angle of inclination of the generatrix, comprising, in the upper face, a plurality of radial ribs, preferably three, arranged at equal angles, with a gradually larger profile towards the periphery of such base, which incorporate, in their free end, corresponding to the perimeter of such piece, an upper projection which acts as the stop block of the second piece, which has a bell configuration, also of a truncated cone shape, with a sharper angle of inclination of the generatrix and including an opening at the point, to allow the passage of the seedling.

These two pieces, that are physically independent of each other, are fixed in the mounted position by means of pins or similar items that are located at the above-mentioned projections, are fixed to the edge area of the upper bell, thus allowing a fast and simple connection and disconnection of both pieces.

This way a chamber is obtained which, apart from the aforementioned upper opening for the passage of the seedling, has also a lower perimeter opening located at the lowest part of the container, that allows both the draining of the substrate that fills the chamber and the steering of the roots in a appreciably radial direction as they grow.

Obviously, any other means can be used that allow a fast and easy assembly and disassembly of both parts of the pot, like extension tabs of the upper bell, for instance, that can be coupled with screws or edge plugs of the base piece.

The assembly is complemented by means of a third piece consisting of a belt that accurately seals the perimeter opening, transforming the transplant seedbed in a container for the root system of the tree. It is very useful for transport and storage purposes.

Once the tree is in its final location, the belt and the basis of the seedbed are extracted, leaving only the upper bell with the tree. This latter provides an anchoring means to the soil (consequently, stakes are no longer required) and a protection for the basis of the trunk.

The device will be store in an upright position, which facilitates its handling.

The special arrangement of this new pot entails many different advantages, among them:
- Low cost, as a consequence of the material used, which is lightweight and resistant.
- Easy storage and transportation of the empty containers, as a result of their stacking characteristics.
- It allows the cultivation of trees at any soils, however bad they are.
- Minimum impact on the nursery soil and maximum exploitation of the available space.
- It does not require soil maintenance during the cultivation
- Protection against rodents, as they cannot overcome the slipping surface of the upper bell.
- Facilitates the mowing or clearing of the cropping tramlines.
- Avoids the washing off of nutrients caused by rain.
- Minimizes the formation of puddles in the cropping tramlines.
- Minimizes the consumption of irrigation water and fertilizers.
- The use of the transplant container allows to obtain a surface root system properly arranged in terms of space, with long and properly maintained roots.
- The plants are easily pulled out, which can be performed at the time of selling them.
- The light weight of the assembly allows that a tree of a considerable size can be pulled out by a single person without the need of machinery.
- The tree can be stored for long periods of time until its final transplant without suffering any damage. The possibility of storing it in an upright position facilitates the irrigation and fertilizing tasks.
- The shape of the root system allows to plant the tree at the final location, considerably reducing the depth of the excavation. This entails the rapid development of the roots of the surface layer, which is oxygen- and nutrient-rich.
- It does not require the use of stakes, as it is very stable, thanks to the conical flat shape of the root system, the weight of the soil and the means of anchoring of the bell to the ground.

### DESCRIPTION OF THE DRAWINGS

To complement the description and to contribute to a better understanding of the characteristics of the invention, according to a preferred exemplary embodiment of the invention, a set of drawings is attached as an integral part of it where, for illustration purposes and without limitation, the following has been represented:
Figure 1.- Shows a general perspective view of a pot for tree nurseries according to the object of the present invention.
Figure 2.- Shows a profile view of the device.

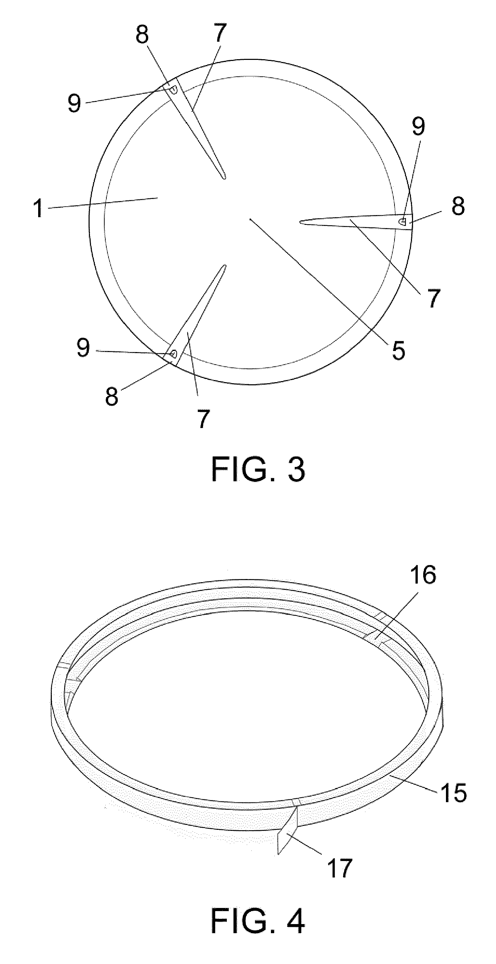

Figure 3.- Shows an upper plan view of the base piece.
Figure 4.- Shows a perspective view of the belt that complements both main pieces shown in figure 1.

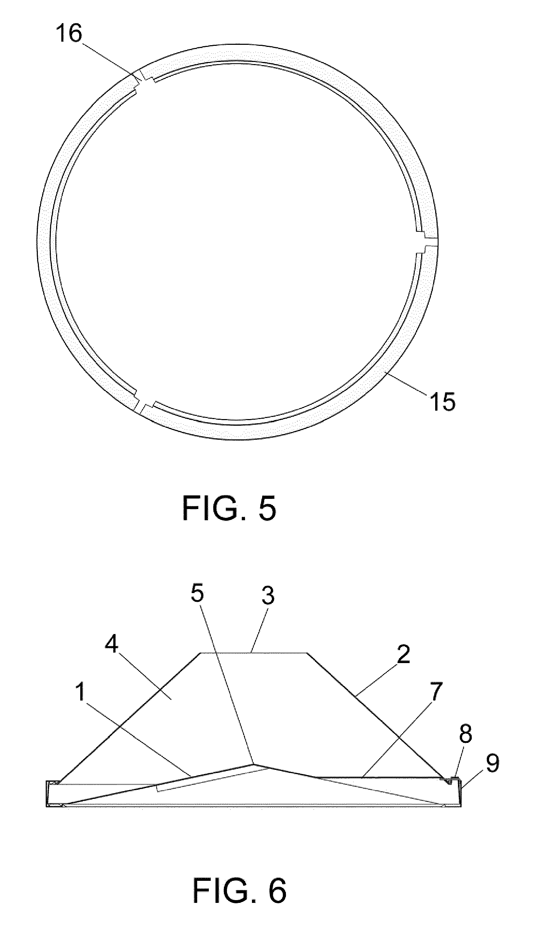

Figure 5.- Shows a plan view of the device shown in figure 4.
Figure 6.- Shows a cross-section view of the assembly shown in figure 2.

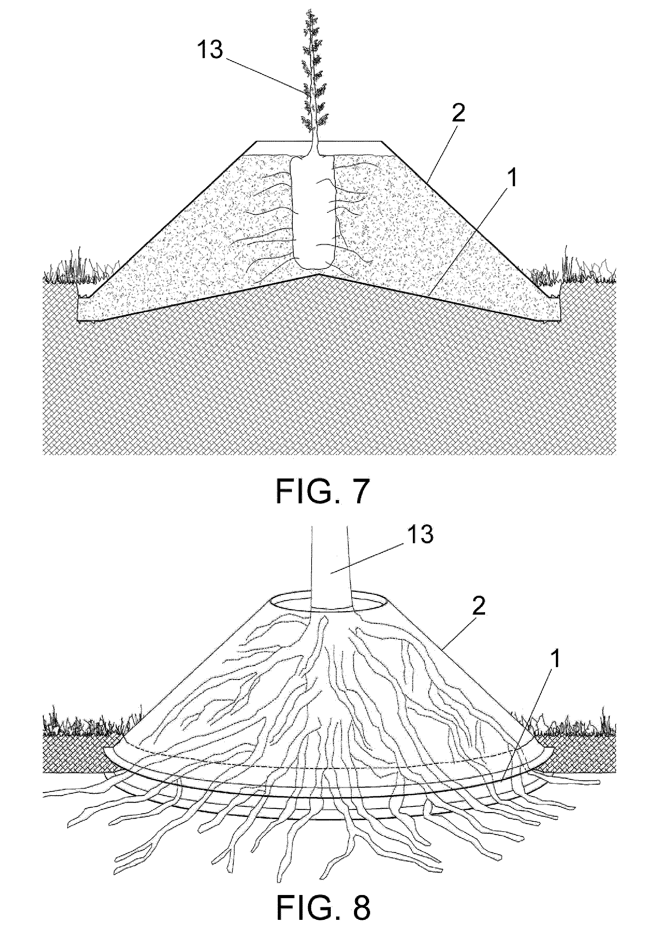

Figure 7.- Shows a view similar to the one shown in Figure 6, wherein the device is implanted on the ground, with a tree planted inside it.
Figure 8.- Shows a perspective view of the assembly shown in Figure 7, corresponding to a considerably later period of time, wherein the roots are appropriately steered through the device.
Figure 9.- Shows a side view of the assembly shown in the previous figure, wherein the base piece has been removed from the device, for the transplantation to the final tree location, where the upper bell can be used as a protection device.
Figure 10.- Shows the appearance of a bare root tree and the common planting method, according to the above-mentioned state of the art.
Figure 11.- Shows the appearance of a tree which has been pulled off with the root-ball and its ordinary method of planting, according to the previously mentioned state of the art.
Figure 12.- Shows the appearance of a pot-cultured root-ball at the time of the final transplantation, according to the previously mentioned state of the art.

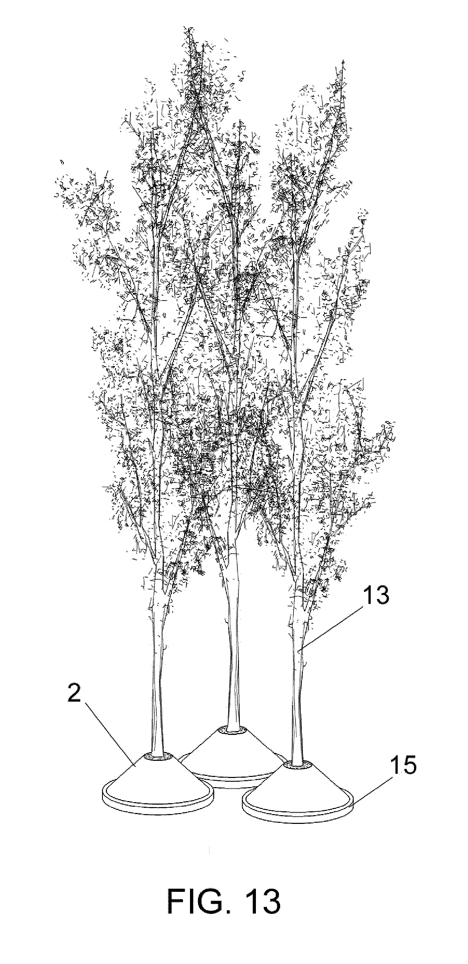

Figure 13.- finally shows a perspective view of three trees that are ready to be transplanted using the device that is the object of the invention.

### PREFERRED EMBODIMENT OF THE INVENTION

In the light of the above-mentioned figures it can be appreciated that the pot for nurseries that is the subject matter of the invention is formed by a combination of two pieces that are independent each other, namely a base piece (1) with a truncated and very flat cone shape, i.e., with a sharp inclination of the generatrix, and an upper piece or bell (2), also with a cone shape but, in this case, considerably slenderer, i.e., with a lesser inclination of the generatrix, which incorporates at the point a hole (3) for the passage of the seedling (13), so that a chamber (4) is formed between both pieces (1) and (2) which also has a truncated cone shape, considerably flat and with a raised central bottom, corresponding to the point (5) of the base piece (1).

This chamber (4) is connected to the outside through the opening (3) of the bell, as well as through a perimeter opening (6) defined between both pieces (1 and 2) when they are appropriately assembled together.

To obtain this opening (6), the upper side of the base piece (1) should incorporate a plurality of ribs (7), (three, in the exemplary embodiment chosen, as shown in figure 2), the thickness of such ribs being gradually increased towards the opening (6), and where the bell (2) will rest, that are finished with an upper projection (8) which, on the one hand, acts as a stop block for the perimeter edge of the bell, (2), and on the other hand is used as a supporting means for a pin (9) that connects both pieces penetrating inside an opening (10) made in the bell (2).

The assembly is complemented with a third piece, consisting of a belt (15), forming a ring with a "U"-shaped cross section, which accurately seals the perimeter opening, converting the transplant seedbed into a packaging for the root system of the tree. This element is very useful for the transport and storage.

More specifically, this latter element may be removed through a perimeter guide (17) and the relevant line of weakness corresponding to such guide, incorporating inside it squared recesses (16) that can be adapted to the ribs (7).

Finally, it should be mentioned that the bell (2) comprises, as a perimeter extension, several tabs (11), with openings (12) that, after the transplant and the required removal of the base piece (1) allow to secure the bell (2) to the ground by means of simple metal pins, that have been previously mentioned and that are not shown in the drawings.

## Claims

1. Transplant container for nurseries, especially designed for the initial development of tree seedlings, **characterised in that** it is formed by two pieces that are physically independent each other, a conical base piece, with its tip pointing upwards and with a marked angle of inclination of the generatrix, and an upper, bell-shaped piece, also with a truncated cone configuration, with a considerably lower angle of inclination of the generatrix, and incorporating an opening for the passage of the seedling, wherein both pieces, in the assembled status, define a chamber of a truncated cone shape, communicated with the outside through the above-mentioned upper opening of the bell and through a perimeter opening established between both pieces by means of spacers, wherein removable anchoring means have also been foreseen between both pieces.

2. Transplant container for nurseries, according to claim 1, **characterised in that** the base piece and the upper piece are complemented by a third piece in the shape of a belt, that seals the perimeter opening defined between the base piece and the upper piece.

3. Transplant container for nurseries, according to claim 1, **characterised in that** the above-mentioned spacer means consist of radial ribs made on the upper side of the base piece, whose height gradually grows towards the periphery of such piece, wherein they are topped with upper projections, the said ribs and projections being used as supports for the perimeter edge of the upper bell.

4. Transplant container for nurseries, according to the previous claims, **characterised in that** the anchoring means between both pieces consist of openings made on the said projections, wherein pins can be inserted and housed inside the edge openings of the upper bell.

5. Transplant container for nurseries, according to the previous claims, **characterised in that** the bell or upper piece incorporates, as an extension of the lower edge a series of perforated tabs to fix the bell to the ground upon the transplant and after the elimination of the base piece, thanks to a series of metal pins (14) or similar items, that are stuck on the ground.
